Europäisches Patentamt

European Patent Office

Office européen des brevets

(11) Veröffentlichungsnummer: **0 063 770**
**A2**

(12) **EUROPÄISCHE PATENTANMELDUNG**

(21) Anmeldenummer: 82103267.9

(22) Anmeldetag: 19.04.82

(51) Int. Cl.³: **B 29 J 5/00, C 09 J 3/16,**
**C 08 L 97/02, B 32 B 21/02**

(30) Priorität: 21.04.81 DE 3115846

(43) Veröffentlichungstag der Anmeldung: 03.11.82
Patentblatt 82/44

(84) Benannte Vertragsstaaten: AT BE CH DE FR LI NL SE

(71) Anmelder: DEUTSCHE TEXACO
AKTIENGESELLSCHAFT, Überseering 40,
D-2000 Hamburg 60 (DE)

(72) Erfinder: Ripkens, Gerd, Wiesenbruchstrasse 22,
D-4132 Kamp-Lintfort (DE)
Erfinder: Schittek, Hans, Händelstrasse 26,
D-4133 Neukirchen-Vluyn (DE)
Erfinder: Buschfeld, Adolf, Dr., Bergstrasse 3,
D-4243 Alpen (DE)

(74) Vertreter: Schupfner, Gerhard et al, Patentanwälte
Dipl.-Ing. Hans-Jürgen Müller Dipl.-Chem.Dr.phil.nat.
Gerhard Schupfner Dipl.-Ing. Hans-Peter Gauger,
Karlstrasse 5 D-2110 Buchholz in der Nordheide (DE)

(54) Verfahren zur Herstellung drei- und mehrschichtiger Spanplatten.

㊵ Verfahren zur Herstellung drei- und mehrschichtiger Spanplatten unter Einsatz von Phenolformaldehyd- Decklagenharzen in weiterer Ausgestaltung des Verfahrens nach Patent Nr. (P 2 944 178.9-43), indem die Decklagenspäne mit einem Phenolformaldehydharz verleimt werden, das bei einer Verarbeitungsviskosität bis zu maximal 3 000 mPas einen Feststoffgehalt zwischen 20 und 30% und einen Alkaligehalt unter 8% aufweist.

EP 0 063 770 A2

Müller, Schupfner & Gauger
Patentanwälte

Karlstraße 3
2110 Buchholz

D-002 81 EP

0063770

- 1 -

Verfahren zur Herstellung drei- und mehrschichtiger Spanplatten

Decklagen von drei- und mehrschichtigen Spanplatten werden in der Regel mit den gleichen Phenolharzen hergestellt, die auch zur Verleimung der Mittellagenspäne benutzt werden. Während die hohe Reaktivität dieser 45 - 48 %igen wässrigen Harze in den Mittellagen voll zur Geltung kommt, führt sie in den Deckschichten zu der bekannten Versprödung der Oberfläche. Hinzu kommt, daß die hohe Alkalität dieser Harze, welche zur Schaffung rasant abbindender Mittellagenharze üblicher Feststoffgehalte und Viskositäten erforderlich ist, zu alkalireichem Schleifstaub führt, der bei der Verbrennung das bekannte Problem der Zerstörung der Verbrennungsöfen aufwirft.

Aufgrund dieser Schwierigkeiten hat man vor einigen Jahren spezielle Decklagen-Phenolharze entwickelt, welche die geschilderten Nachteile nicht mehr zeigen. Das Problem wurde dadurch gelöst, daß der Alkaligehalt der 45 - 48 %igen Harze von 9 und mehr % gesenkt und der Formaldehydanteil zur Verminderung der Reaktivität und zur Erzielung ausreichender Lagerstabilitäten ebenfalls reduziert wird.

Diese Maßnahmen führen zu einer etwa 40 %igen Anhebung des Phenolanteiles in den Harzen und somit zu einer wesentlichen Verteuerung der neuen Decklagenharze und damit auch zu einer Verteuerung der Spanplatten, da zur Erhaltung der Spanplatteneigenschaften die auf den Span aufgebrachte Festharzmenge trotz des stark erhöhten Phenolanteiles der Harzlösungen nicht gesenkt werden kann.

In Patent (P 2 944 178.9-43) ist ein Verfahren zur Herstellung von mehrschichtigen Spanplatten offenbart, indem die Decklagenspäne mit einem Phenolformaldehydharz verleimt werden, das bei einer Viskosität von 30 - 90 sec im 4 mm DIN-Becher einen Feststoffgehalt zwischen 30 und 41 % und einen Alkaligehalt unter 8 % aufweist.

In weiterer Ausgestaltung des Verfahrens nach Patent (P 2 944 178.9-43) wird ein Verfahren bereitgestellt, das dadurch gekennzeichnet ist, daß die Decklagenspäne mit einem Phenolformaldehydharz verleimt werden, das bei einer Viskosität bis zu maximal 3 000 mPas einen Feststoffgehalt zwischen 20 und 30 %, vorzugsweise zwischen 25 und 30 %,und einen Alkaligehalt unter 8 %, vorzugsweise zwischen 2 - 6 %,aufweist.

Es wurde gefunden, daß durch Molekülvergrößerung dieser Harze Decklagenphenolharze entstehen, die neben den genannten Vorteilen alkaliarmer Harze eine solche qualitative Verbesserung erfahren, daß der Feststoffanteil, bezogen auf Span, um 30 % und mehr gesenkt werden kann. Die neuartigen Spanplatten-Decklagenbindemittel werden somit dadurch geschaffen, daß sie bei praktisch gleichen Alkaligehalten und Viskositäten der Harzlösungen, nämlich 20 - 100 sec, besonders 30 - 90 sec und insbesondere 30 - 70 sec im 4 mm DIN-Becher, zu sehr großen Molekülen kondensiert werden und nicht wie heute üblich 45 - 48,

...

sondern nach Patent (P 2 944 178.9-43) nur noch 30 - 41 % Feststoff und in weiterer Ausgestaltung von Patent (P 2 944 178.9-43) sogar nur noch 20 - 30 %, vorzugsweise 25 - 30 % Feststoff enthalten. Die durch die wesentlich vergrößerte Molekülstruktur verringerte Lagerstabilität kann durch Senkung des Formaldehydanteiles der Harze kompensiert werden. Der Formaldehydgehalt ist somit von der gewünschten Lagerstabilität vorgegeben.

Der Feststoffgehalt eines Harzes ist der Rückstand, der nach Verdunsten des Wassers und möglicher niedrigmolekularer Verbindungen unter genau festgelegten Bedingungen (1 g, 120°C, 2 h) erhalten wird. In der Regel kann man sagen, daß er bei Spanplattenbindemitteln gegenüber dem theoretischen Feststoffwert um 5 - 7 % niedriger liegt, hauptsächlich bedingt durch das Freiwerden von Reaktionswasser.

Anstelle des Phenolformaldehydharzes können auch Harze aus Formaldehyd oder anderen niederen Aldehyden mit 1 - 4 C-Atomen und Alkylderivaten des Phenols mit 1 - 9, bevorzugt 1 - 4 C-Atomen, in der Alkylgruppe eingesetzt werden.

Durch die qualitative Überlegenheit der neuen Decklagenharze kann der sogenannte Beleimungsfaktor, d.h. der Festharzanteil pro atro Span (absolute Trockenheit), von 10 - 12 % ohne Qualitätseinbuße auf 6 - 8 % reduziert werden. Der Wasserhaushalt des Span-Rohformlings kann sich je nach Feststoffgehalt der Harzlösung und Beleimungsfaktor bei vorgegebener Spanfeuchte zu höheren oder auch niedrigeren Feuchtegehalten der beleimten Späne verändern. So entspricht

...

praktisch der Beitrag eines 37 %igen Harzes bei 8 %iger Beleimung mit 13,6 kg Feuchte/100kg atro Span dem eines herkömmlichen 45 %igen Phenolharzes bei 11,2 %iger Beleimung, bzw. der Beitrag eines 29 %igen Harzes bei 6 %iger Beleimung mit 14,7 kg Feuchte/100 kg atro dem eines herkömmlichen 45 %igen Phenolharzes bei 12 %iger Beleimung.

Die qualitativen Untersuchungen der neuartigen hochmolekularen Spanplattendecklagen-Phenolharze im Vergleich zu einem herkömmlichen 45 %igen Decklagen-Phenolharz wurden an dreischichtigen Spanplatten durchgeführt, wobei die Mittelschichten der Spanplatten mit einem herkömmlichen alkalireichen 45 %igen wässrigen Phenolharz aufgebaut wurden.

Die überlegene Qualität der neuen Phenolharze in den Spanplattendecklagen geht aus den folgenden Beispielen eindeutig hervor:

Beispiele

Tabelle I

Harzzusammensetzungen (Gew.-Teile)

| Harz | A | B | C | Vergleichsharz |
|---|---|---|---|---|
| Phenol | 234 | 218 | 174 | 284 |
| Formalin 37 %ig | 403 | 394 | 300 | 547 |
| Natronlauge 50 %ig | 98 | 93 | 58 | 94 |
| Wasser | 265 | 295 | 468 | 75 |

Kenndaten

| | A | B | C | Vergleichsharz |
|---|---|---|---|---|
| Feststoff % | 37 | 35 | 27 | 45 |
| Viskosität sec 4 mm-DIN-Becher | 43 | 35 | 41 | 45 |
| Gelierzeit min bei 100°C | 27 | 21 | 24 | 25 |

0063770

Die Herstellung dieser Harze kann nach herkömmlichen, bekannten Verfahren erfolgen.

Herstellung des Decklagenharzes A:
234 Teile Phenol und 403 Teile Formalin 37 %ig werden in einem Kolben vorgelegt und auf 70°C aufgeheizt. Zu dieser Mischung werden innerhalb 60 min 98 Teile 50 %ige Natronlauge zugegeben. Nach Chargierung von 265 Teilen Wasser wird die Temperatur auf 80°C gesteigert. Nach Erreichen der Viskosität von 35 sec/ 4 mm DIN-Becher wurde der Ansatz abgekühlt. - Die Decklagenharze B und C wie auch das Vergleichsharz wurden entsprechend hergestellt.

Herstellung des Mittellagenharzes:
203 Gew.Teile Phenol und 463 Gew.-Teile Formalin 37 %ig werden in einem Kolben auf 80°C aufgeheizt. Innerhalb von 2 h werden dann 98 Gew.-Teile Natronlauge 50 %ig in die Reaktionsmischung eingetragen. Die Harzlösung wird anschließend auf 70°C abgekühlt und bei einer Viskosität von 50 sec im 8 mm-DIN-Becher mit 174 Teilen Natronlauge 50 % und 62 Teilen Wasser verdünnt und abgekühlt. Das so erhaltene 45 %ige Harz wurde in den Versuchen als Mittellagen-Bindemittel eingesetzt.

Die Prüfung der Harze wurde an dreischichtigen 16 mmstarken Spanplatten durchgeführt, deren Deckschicht-Mittelschicht-Span-Verhältnis 35 : 65 betrug. Die Beleimung der auf etwa 5 % Feuchte zurückgetrockneten Späne betrug bei den Harzen A und B jeweils 8 % Feststoff/atro Holz, bei Harz C 6 % und bei dem Vergleichsharz 11 %. Der eingesetzte Mittellagenspan wurde in allen Fällen mit 8 % Feststoff eines alkalireichen, herkömmlichen Phenolharzes beleimt. Die Feuchte des beleimten Mittellagenspans betrug vor der Verpressung 11,6 %.

Die Hydrophobierung der Späne erfolgte in allen Fällen mit 1 % Paraffin/atro Holz.

Die Verpressung der Rohlinge erfolgte in vier Minuten bei 180°C. Die Rochdichte der so hergestellten Platten betrug 680 - 690 kg/m$^3$.

Tabelle II

Spanplatteneigenschaften

| Decklagenharz | A | B | C | Vergleichsharz |
|---|---|---|---|---|
| Harzauftrag % atro/atro Holz | 8 | 8 | 6 | 11 |
| Spanfeuchte % | 17,3 | 18,3 | 18,6 | 17,4 |
| Biegefestigkeit N/mm$^2$ | 20,5 | 21,2 | 21,9 | 19,7 |
| Dickenquellung % nach 24 h | 9,6 | 9,5 | 9,6 | 9,6 |

Es werden somit bei wesentlich vermindertem Feststoffgehalt und damit vermindertem Harzauftrag gleiche Festigkeitseigenschaften der erfindungsgemäß hergestellten Spanplatten erzielt.

0063770

Müller, Schupfner & Gauger
Patentanwälte

Karlstraße 5
2110 Buchholz/Nordheide
D-002 81 EP

## Patentansprüche

1. Verfahren zur Herstellung drei- und mehrschichtiger Spanplatten, indem die Decklagenspäne mit einem Phenolformaldehydharz verleimt werden, das bei einer Viskosität von 30 - 90 sec im 4 mm DIN-Becher einen Feststoffgehalt zwischen 30 und 41 % und einen Alkaligehalt unter 8 % aufweist, nach Patent Nr. (P 2 944 178.9-43) d a d u r c h  g e k e n n z e i c h n e t , daß die Decklagenspäne mit einem Phenolformaldehydharz verleimt werden, das bei einer Viskosität bis zu maximal 3 000 mPas einen Feststoffgehalt zwischen 20 und 30 % aufweist.

2. Verfahren nach Anspruch 1, d a d u r c h  g e k e n n z e i c h n e t , daß die Decklagenspäne mit einem Phenolformaldehydharz verleimt werden, das einen Feststoffgehalt zwischen 25 und 30 und einen Alkaligehalt zwischen 2 - 6 % aufweist.